# EUROPEAN PATENT APPLICATION

(11) **EP 1 251 387 A1**
(43) Date of publication of application: **23.10.2002**
(21) Application number: 02017032.0
(22) Date of filing: 08.12.1997
(51) Int. Cl.: G02C 9/00

(54) **Auxiliary lenses for eyeglasses**

(30) Priority: 13.12.1996 US 766327
(62) Divisional of application: 97121611.4
(71) Applicant: Contour Optik Inc., Chiayi 621 (TW)
(72) Inventor: Chao, Richard, Chiayi 608 (TW)
(74) Representative: Casalonga, Axel

(57) **Abstract**

An eyeglass device includes a primary frame (10) and an auxiliary frame (20) for supporting lenses. The primary frame (10) includes a magnetic connector (14) secured in the bridge (13). The auxiliary frame (20) includes a bridge (21) having a projection (22) for engaging over the bridge (13) of the primary frame (10) and having a magnetic connector (24) for engaging with the connector (14) of the primary frame (10) such that the spectacle frames (10, 20) can be easily secured together with only one hand.

## Description

The invention relates to an auxiliary frame for eyeglasses.

US Patent No. 5,568,207 to Chao comprise a primary frame having two magnet members provided on the upper side portions, and an auxiliary frame including a pair of arms each having a magnet member for engaging with that of the primary frame. Two hands are required for attaching the auxiliary frame to the primary frame.

The invention is to provide an auxiliary frame for engaging onto the primary frame by only one hand.
FIG. 1 is a top plan view showing a primary frame and an auxiliary frame separating from each other;
FIG. 2 is a top plan view of the primary frame and the auxiliary frame combination;
FIG. 3 is a front elevational view of the primary frame and the auxiliary frame combination;
FIG. 4 is a cross sectional view taken along middle bridge portions of FIG. 2;
FIGS. 5, 6, 7, 8 are cross sectional views similar to FIG. 4, showing four applications of the middle bridge portions of the eyeglass device; and
FIG. 9 is a top plan view showing another application of the eyeglass device.

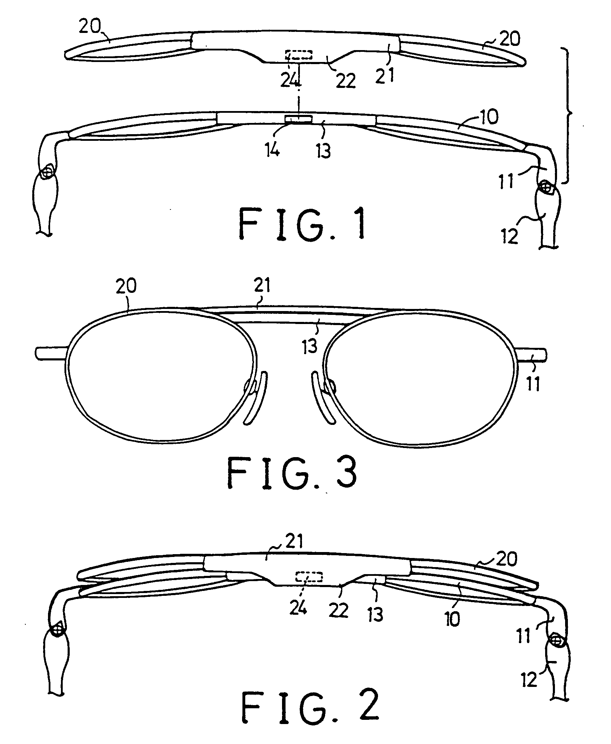

Referring to FIGS. 1 to 3, an eyeglass device comprises a primary frame 10 for supporting primary lenses and including two sides each having an extension 11 extended rearwardly for pivotally coupling a leg 12 and including a middle bridge 13 for supporting a magnetic or magnetizable connector 14. An auxiliary frame 20 may support the auxiliary lenses and includes a middle bridge 21 having a projection 22 extended rearward for extending over and for engaging with the bridge 13 of the primary frame 10 (FIGS. 2-4). The auxiliary frame 20 includes a magnetic or magnetizable connector 24 secured in the projection 22 for engaging with the connector 14 of the primary frame 10 such that the auxiliary frame 20 can be stably supported on the primary frame 10 (FIGS. 2-4).

The projection 22 is supported on the bridge 13 of the primary frame 10 such that the auxiliary frame 20 will not move downward relative to the primary frame 10 and will not disengage from the primary frame 10 when its user conducts jogging or jumping exercises.

The user is only required to engage the connector 24 of the auxiliary frame 20 with the connector 14 of the primary frame 10, such that the frames 10, 20 can be easily secured with each other. The user can thus easily use only one hand to stably attach the auxiliary frame to the primary frame. Alternatively, only one of the connectors 14, 24 is required to be a magnet. For example, if only connector 24 is provided as a magnet in the bridge 21 of the auxiliary frame, the connector 14 is not required to be a magnet, but could be composed typically of magnetic iron. It is only required to have the bridge 13 made by magnetically attractive material such that the bridge 21 of the auxiliary frame 20 may also be easily attached to the primary frame 10. Only one or one pair of magnetizable members are required to be a magnet for attaching the spectacle frames together.

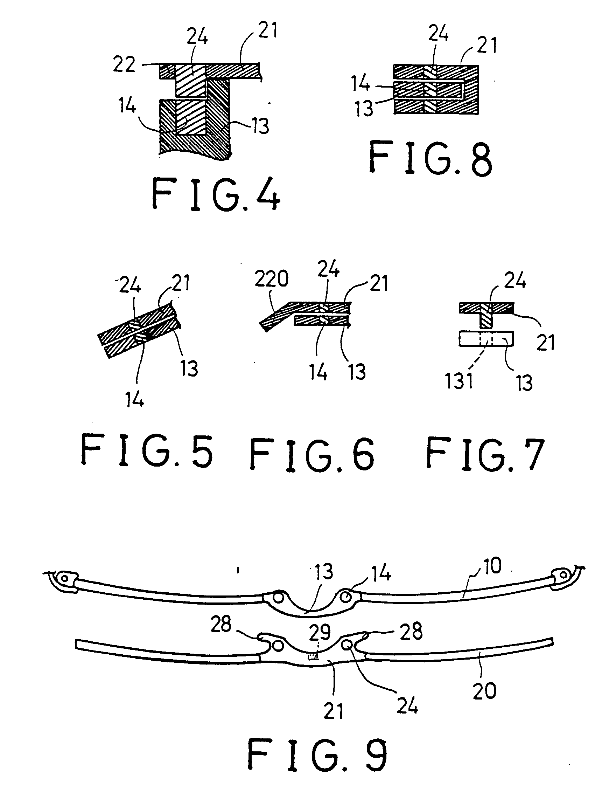

The connector 24 may be slightly extended downward toward the connector 14 (FIG. 4). The bridges 13, 21 may be tilted (FIG. 5) or may include a flange 220 tilted downward (FIG. 6) for engaging with the bridge 13. The magnetic member 24 may be extended downward from the bridge 21 for engaging with a hole 131 of the bridge 13 (FIG. 7). The bridge 21 may include a C-shape having two magnetic members 24 engaged above and below the magnetic member 14 (FIG. 8). As shown in FIG. 9, the bridge 21 may include one or more hand grips 28 for facilitating the holding of the auxiliary frame, and may include a stop 29 extended downward from the bridge 21 for engaging with the bridge 13 and for preventing the bridge 21 from being disengaged from the bridge 13.

Accordingly, the eyeglass device includes an auxiliary frame that may be easily secured to the primary frame with only one hand.

## Claims

1. An eyeglass device comprising a first frame comprising a bridge (13) and a second frame comprising a bridge (21), the second frame and the first frame being releasably securable one relative to the other by engagement of the bridge (21) of the second frame with the bridge (13) of the first frame using magnetically connecting means comprising a first connector means (14) arranged in the bridge (13) of the first frame and a second connector means (24) arranged in the bridge (21) of the second frame, **characterized in that** the magnetically connecting means effects a magnetic connection between the top surface of the bridge (13) of the first frame and the bridge (21) of the second frame, and **in that** a portion of the bridge (21) of the second frame is supported on a portion of the top side of the bridge (13) of the first frame.

2. The eyeglass device according to anyone of the preceding claims, wherein the magnetic connection acts in a vertical direction substantially perpendicular to the top side of the bridge (13) of the first frame (10).

3. The eyeglass device according to any preceding claim, wherein the second connector means (24) is supported over the top side of the bridge (13) of the first frame (10).

4. The eyeglass device according to anyone of the preceding claims, wherein the bridge (21) of the second frame and the bridge (13) of the first frame (21) are adapted so that the bridge (13) of the first frame (10) provides underlying support for the bridge (21) of the second frame (20) when the second frame (20) is secured to the first frame (10).

5. The eyeglass device according to anyone of the preceding claims, wherein the bridge (21) of the second frame comprises a projection (22) adapted so that the bridge (13) of the first frame (10) provides underlying support for the bridge (21) of the second frame (20) when the second frame (20) is secured to the first frame (10).

6. The eyeglass device according to claim 5, wherein the projection (22) extends rearward.

7. The eyeglass device according to claim 5 or 6, wherein the projection (22) is adapted to be supported on the top side of the bridge (13) of the first frame (10).

8. The eyeglass device according to anyone of the claims 5 to 7, wherein the projection (22) is adapted to magnetically engage the top side of the bridge (13) of the first frame (10).

9. The eyeglass device according to anyone of the claims 5 to 8, wherein the second connector means is secured in the projection (22).

10. The eyeglass device according to anyone of the claims 5 to 9, wherein the projection (22) is adapted to extend over the bridge (13) of the first frame (10) and magnetically engage with the first connector means (14) when the second frame (20) is secured to the first frame (10).

11. The eyeglass device according to anyone of the claims 5 to 10, wherein the projection (22) is adapted to be supported on the top side of the first connector means (14) and provides magnetic engagement between the projection (22) and the top side of the bridge (13) of the first frame (10) when the second frame (20) is secured to the first frame (10).

12. The eyeglass device according to anyone of the claims 5 to 11, wherein the projection (22) is adapted to extend over and magnetically engage with the bridge (13) of the first frame (10) and the second connector means is supported on the top side of the bridge (13) of the first frame (10) to provide magnetic engagement between the top side of the bridge (13) of the first frame and the second connector means (24) when the second frame (20) is secured to the first frame (10).

13. The eyeglass device according to anyone of the preceding claims, wherein the first connector means (14) is located on the top side of the bridge (13) of the first frame (10).

14. The eyeglass device according to anyone of the claims 5 to 13, wherein the projection (22) of the bridge (21) of the second frame (20) is supported on the top side of the first connector means (14) and provides a magnetic connection between the top side of the bridge (13) of the first frame (10) and said projection (22).

15. The eyeglass device according to anyone of the preceding claims, wherein the first connector means comprises one or more magnets (14) mounted in the bridge (13) of the first frame (10).

16. The eyeglass device according to claim 15, wherein the magnets (14) are operatively exposed to the top surface of said bridge (13).

17. The eyeglass device according to anyone of the preceding claims, wherein the second connector means comprises one or more magnets (24) mounted in the bridge (21) of the second frame (20).

18. The eyeglass device according to claim 17, wherein the magnets (24) are operatively exposed to a lower surface of said bridge portion.

19. The eyeglass device according to anyone of the preceding claims, wherein the bridge (13) of the first frame comprises a hole (131).

20. The eyeglass device according to anyone of the claims 1 to 17, wherein the bridge (21) of the second frame comprises a C-shaped portion compring two magnetic means (24) adapted to engage above and below the first connector means (14) when the second frame (20) is secured to the first frame (10).

21. The eyeglass device according to anyone of the preceding claims, wherein the bridge (21) of the second frame comprises one or more hand grips (28).

22. The eyeglass device according to anyone of the preceding claims, wherein the first frame is a main frame (10) and the second frame is an auxiliary frame (20).

23. The eyeglass device according to anyone of the preceding claims, wherein the first frame is an auxiliary frame (10) and the second frame is a main frame (20).

24. The eyeglass device according to claim 22 or 23, wherein the main frame comprises two sides and two legs (12), each leg (12) being pivotally coupled to one side.
